# EUROPÄISCHE PATENTSCHRIFT

(11) **EP 2 108 561 B1**
(45) Veröffentlichungstag und Bekanntmachung des Hinweises auf die Patenterteilung: **15.10.2014**
(21) Anmeldenummer: 09156105.0
(22) Anmeldetag: 25.03.2009
(51) Int. Cl.: B61C 3/02, B61C 9/24, B61C 17/06

(54) **Schienenfahrzeug sowie Verfahren zur Reduzierung des Kraftstoffverbrauchs eines Schienenfahrzeugs**
Railway vehicle and method for reducing the fuel consumption of said vehicle
Véhicule ferroviaire et procédé de réduction de la consommation de carburant du dit véhicule

(30) Priorität: 11.04.2008 DE 102008019683
(43) Veröffentlichungstag der Anmeldung: 14.10.2009
(73) Patentinhaber: Siemens Aktiengesellschaft, 80333 München (DE)
(72) Erfinder: Hintermeir, Stefan, 83229 Aschau I. Ch (DE)

(56) Entgegenhaltungen:
- EP-A2- 1 849 676
- WO-A1-2007/143850
- WO-A2-2006/116479
- US-A1- 2006 005 739

## Beschreibung

Die Erfindung bezieht sich auf ein Schienenfahrzeug mit
- mindestens einem Verbrennungsmotor, welcher Traktionsenergie bereitstellt,
- mindestens einem Generator, der in Wirkverbindung mit mindestens einem der Verbrennungsmotoren steht und hierüber angetrieben elektrische Energie erzeugt,
- elektrischen Verbrauchern, welche zur Energieversorgung in Wirkverbindung mit mindestens einem der Generatoren stehen, und
- einer Einrichtung zur Reduzierung des Kraftstoffverbrauchs, welche einen Energiespeicher sowie eine dem Energiemanagement dienende Steuer- und Regeleinheit umfasst.

Die Erfindung bezieht sich auch auf ein Verfahren zur Reduzierung des Kraftstoffverbrauchs eines Schienenfahrzeugs bei dem
- mindestens ein Verbrennungsmotor Traktionsenergie bereitstellt,
- mindestens ein Generator elektrische Energie erzeugt und diese Energie zumindest teilweise von elektrischen Verbrauchern verbraucht wird,
- der Bedarf an Traktionsleistung bestimmt wird und
- Verbrennungsmotoren bei fehlendem Bedarf an Traktionsleistung abgestellt werden.

Eine solche Vorrichtung und ein solches Verfahren sind in der DE 10 2006 019 990 A1 bereits offenbart. So ist dort ein Schienenfahrzeug mit mehreren Verbrennungsmotoren beschrieben, welche die zum Antrieb des Schienefahrzeugs erforderliche Traktionsenergie bereitstellen.

Die Verbrennungsmotoren treiben einen elektrische Energie erzeugenden Generator an. Die auf diese Weise erzeugte elektrische Energie dient sowohl zum Antrieb des Schienenfahrzeugs als auch zur Energieversorgung elektrischer Verbraucher. Schließlich ist auch eine Einrichtung zur Reduzierung des Kraftstoffverbrauchs offenbart, die eine dem Energiemanagement dienende Steuer- oder Regeleinheit umfasst, welche die Anzahl der laufenden Verbrennungsmotoren dem momentanen Energiebedarf des Schienenfahrzeugs anpasst und gegebenenfalls alle bis auf einen Verbrennungsmotor abstellt. Dieser hält dann die Energieversorgung des Bordnetzes aufrecht. Ein elektrischer Fahrmotor bezieht zusätzlich Energie aus einem Energiespeicher, wobei der Energiespeicher beim Bremsen erzeugte Bremsenergie zwischenspeichert und sowohl dem Fahrmotor als auch dem Bordnetz zur Verfügung stellt. Trotz der vorgeschlagenen Maßnahmen verbraucht das Schienenfahrzeug viel Kraftstoff.

Aufgabe der vorliegenden Erfindung ist es ein Schienenfahrzeug und ein Verfahren zur Reduzierung des Kraftstoffverbrauchs eines Schienenfahrzeugs anzugeben, welches einen besonders geringen Kraftstoffverbrauch des Schienenfahrzeugs ermöglicht.

Die Aufgabe wird erfindungsgemäß bei einem Schienenfahrzeug der eingangs genannten Art dadurch gelöst, dass der Energiespeicher ein Leerlaufpuffer-Energiespeicher ist und in Wirkverbindung zu mindestens einem der Verbrennungsmotoren steht und von diesem bereitgestellte Energie zwischenspeichert und
- Mittel zur Bestimmung des Bedarfs an Traktionsleistung vorgesehen sind, wobei
- die Mittel zur Bestimmung des Bedarfs an Traktionsleistung so mit der Steuer- und Regeleinheit zusammen wirken, dass bei einem fehlendem Bedarf an Traktionsleistung die Versorgung der elektrischen Verbraucher bei abgestellten Verbrennungsmotoren durch den Energiespeicher erfolgt.

Die Erfindung ermöglicht das Unterbinden jeglichen Kraftstoff verschwendenden Leerlaufsbetriebs der Verbrennungsmotoren des Schienenfahrzeugs. Hierzu weist die Vorrichtung zur Reduzierung des Kraftstoffverbrauchs einen für diesen Zweck dimensionierten Leerlaufpuffer-Energiespeicher auf und eine Steuer- und Regeleinheit, welche bei fehlendem Bedarf an Traktionsleistung ein Abstellen aller Verbrennungsmotoren ermöglicht, indem die Versorgung der elektrischen Verbraucher auf den Leerlaufpuffer-Energiespeicher umgestellt wird. Bei dem hierzu mit der Steuer- und Regeleinheit zusammenwirkenden Mittel zur Bestimmung des Bedarfs an Traktionsleistung kann es sich um ein Detektionsgerät handeln, welches die an der Antriebsanlage des Schienenfahrzeug eingestellte positive Beschleunigung des Schienenfahrzeugs registriert, wobei das Detektionsgerät über eine Signalleitung mit der Steuer- und Regeleinheit verbunden ist, so dass bei einem fehlenden Bedarf an Traktionsleistung das Gerät die Steuer- und Regeleinheit hierüber informiert. Die Versorgungsumstellung der elektrischen Verbraucher auf den Leerlaufpuffer-Energiespeicher kann beispielsweise passiv erfolgen. Hierzu ist gemäß einem Ausführungsbeispiel der Leerlaufpuffer-Energiespeicher ein elektrochemischer Akkumulator, welcher mit den elektrischen Verbrauchern an einem gemeinsamen Bordnetz angeschlossen ist, wobei das Bordnetz bei laufenden Verbrennungsmotoren mittels des mindestens einen Generators mit elektrischer Energie versorgt wird. Ein passives Umstellen der Energieversorgung auf den Leerlaufpuffer-Energiespeicher kann beispielsweise derart erfolgen, dass die Steuer- und Regeleinheit die Verbrennungsmotoren abstellt. Dadurch liegt am Leerlaufpuffer-Energiespeicher keine Ladespannung mehr an, so dass dieser automatisch das Bordnetz mit elektrischer Energie versorgt. Im Rahmen der vorliegenden Erfindung ist es aber nicht zwingend erforderlich, dass der Leerlaufpuffer-Energiespeicher an einem gemeinsamen Bordnetz mit den elektrischen Verbrauchern angeschlossen ist. Es können zudem mehrere Bordnetze des Schienenfahrzeugs vorgesehen sein. Bei den Bordnetzen kann es sich um Wechselspannungsnetze oder Gleichspannungsnetze handeln. Im Rahmen der vorliegenden Erfindung kann eine aktive Umstellung der Versorgung der elektrischen Verbraucher auf den Leerlaufpuffer-Energiespeicher vorgesehen sein. Beispielsweise mittels von der Steuer- und Regeleinheit angesteuerten Schaltern oder Ähnlichem.

Ein fehlender Bedarf an Traktionsleistung liegt beispielsweise dann vor, wenn sich das Schienenfahrzeug auf einer Gefällefahrt befindet und nicht beschleunigt werden soll, so dass auf die Achsen des Schienenfahrzeugs kein antreibendes Drehmoment übertragen wird. Zeiträume, in welchen kein Bedarf an Traktionsleistung besteht, können bei einer Rangierlokomotive mehr als 65% der gesamten Fahrzeit betragen. Die laufenden Verbrennungsmotoren verbrauchen in diesen Zeiten zur Aufrechterhaltung einer minimalen Umdrehungszahl mehr Energie als beispielsweise elektrische Verbraucher des Bordnetzes. Erfindungsgemäß wird daher vorgeschlagen, die elektrischen Verbraucher in Zeiträumen, in welchen kein Bedarf an Traktionsleistung besteht, nicht mittels eines Verbrennungsmotors zu versorgen, sondern für diesen Zweck einen Leerlaufpuffer-Energiespeicher vorzusehen, welcher von den Verbrennungsmotoren gelieferte Energie zwischenspeichert, um diese während Leerlaufzeiten der Verbrennungsmotoren den elektrischen Verbrauchern zur Verfügung zu stellen. Der Leistungsfluss zwischen den einzelnen Komponenten wird hierbei von der Steuer- und Regeleinheit verwaltet. Die Steuer- und Regeleinheit ist hierzu über Steuerleitungen mit den zu steuernden oder zu regelnden Komponenten des Schienenfahrzeugs verbunden. Von der Steuer- und Regeleinheit zu steuernde oder zu regelnde Komponenten des Schienenfahrzeugs sind beispielsweise die Verbrennungsmotoren oder einzelne elektrische Verbraucher. Die Steuer- und Regeleinheit kann in einer einzelnen Geräteeinheit oder über mehrere Geräte verteilt realisiert sein oder Bestandteil eines übergeordneten Steuerungs- und/oder Regelsystems des Schienenfahrzeugs sein. Die Steuer- und Regeleinheit arbeitet beispielsweise mit einer Vielzahl von Geräten zusammen, um beispielsweise Parameter zu erhalten, welche Aufschluss über einen physikalischen Zustand einer zu steuernden oder zu regelnden Komponente geben. Die Parameter dienen beispielsweise auch zum Überprüfen, ob der Fahrzeugführer eine von der Steuer- und Regeleinheit abgesetzte Anfrage quittiert hat. Hierzu dient beispielsweise ein im Führerstand des Fahrzeugs aufgestelltes Quittiergerät beispielsweise in Gestalt eines einfachen Drucktasters, der beispielsweise mit einer optischen Signaleinheit zusammenwirkt. Eines dieser mit der Steuer- und Regeleinheit zusammenarbeitenden Geräte kann das Mittel zur Bestimmung des Bedarfs an Traktionsleistung sein. Das Mittel zur Bestimmung des Bedarfs an Traktionsleistung könnte aber auch anstelle eines Gerätes als Bestandteil eines übergeordneten Systems realisiert sein. Das Schienenfahrzeug weist zu seinem Antrieb mindestens einen Verbrennungsmotor, beispielsweise einen Dieselmotor, auf. Es können aber auch mehrere, das Schienenfahrzeug gemeinsam antreibende Verbrennungsmotoren vorgesehen sein. Bei dem Schienenfahrzeug kann es sich beispielsweise um ein dieselelektrisches oder dieselhydraulisches Schienenfahrzeug handeln. Unabhängig davon, wie die vom Verbrennungsmotor erzeugte Leistung auf die anzutreibenden Achsen des Schienenfahrzeugs übertragen wird, wird immer ein Teil der von den Verbrennungsmotoren gelieferten Energie mittels eines Generators in elektrische Energie umgewandelt, so dass Energie für elektrische Verbraucher des Schienenfahrzeugs zur Verfügung steht. Dabei ist es keineswegs erforderlich, dass die Generatoren auch Traktionsleistung bereitstellen. Wie bereits erwähnt wurde, ist das Fahrzeug beispielsweise ein dieselhydraulisches Triebfahrzeug. Gemäß einer bevorzugten Ausgestaltung sind die Generatoren jedoch mit einem Frequenzumrichter verbunden, der wiederum mindestens einen Elektromotor mit der gewünschten Spannung und Frequenz versorgt. Die von den Elektromotoren erzeugte Bewegungsenergie wird schließlich in die Radachsen eingeleitet. Der Frequenzumrichter kann über mehrere Ausgänge verfügen, wobei ein Ausgang beispielsweise einem Wechselspannungsnetz für leistungsstarke Verbraucher oder einem Gleichspannungsnetz mit beispielsweise 24 V oder einer Leistungsversorgungsleitung zum Leerlaufpuffer-Energiespeicher zugeordnet sein kann. Bei den elektrischen Verbrauchern kann es sich um Hilfsbetriebe, wie beispielsweise Lüfter, Pumpen und Ähnliches handeln. Weiterhin kommen Komfortverbraucher, wie beispielsweise Klimaanlagen, Heizung und Ähnliches, sowie weitere an ein Bordnetz angeschlossene elektrische Verbraucher in Betracht. Nicht alle elektrischen Verbraucher des Schienenfahrzeugs müssen zwingend fortwährend mit elektrischer Energie versorgt werden. Bei abgestellten Verbrennungsmotoren kann daher eine Auswahl getroffen werden, welche der elektrischen Verbraucher mit Energie versorgt werden. So kann beispielsweise die Steuer- und Regeleinheit elektrische Verbraucher mit hohem Energiebedarf zeitversetzt unter Berücksichtung einer geeigneten Prioritäts-Reihenfolge in Betrieb setzen. Ferner kann beispielsweise auch vorgesehen sein, dass die Steuer- und Regeleinheit bei fehlendem Bedarf an Traktionsleistung die elektrische Versorgung der elektrischen Verbraucher nur dann auf den Leerlaufpuffer-Energiespeicher umstellt, wenn zu diesem Zeitpunkt eine Energieversorgung elektrischer Verbraucher mit besonders hohem Energieverbrauch nicht erforderlich ist.

Nicht erfindungswesentlich ist in welcher Form der Leerlaufpuffer-Energiespeicher die von mindestens einem Verbrennungsmotor gelieferte Energie zwischenspeichert. Beispielsweise kann es sich bei dem Leerlaufpuffer-Energiespeicher um ein Schwungrad handeln oder um einen elektrochemischen Speicher auf Batteriebasis. Auch können neben dem mindestens einen Verbrennungsmotor weitere Energiequellen vorgesehen sein, deren Energie von dem Leerlaufpuffer-Energiespeicher zwischengespeichert wird. So kann beispielsweise beim Bremsen gewonnene Bremsenergie zusätzlich in den Leerlaufpuffer-Energiespeicher eingespeist werden.

Die Mittel zur Bestimmung eines Bedarfs an Traktionsenergie sind beispielsweise derart ausgebildet, dass diese sowohl einen fehlenden Bedarf an Traktionsleistung als auch einen erneuten Bedarf an Traktionsleistung bestimmen und an die Steuer- und Regeleinheit als Signalwert übermitteln.

Die Steuer- und Regeleinheit kann derart ausgebildet sein, dass bei abgestellten Verbrennungsmotoren die Steuer- und Regeleinheit aufgrund eines erneuten Bedarfs an Traktionsleistung zumindest einen Teil der abgestellten Verbrennungsmotoren, gegebenenfalls nach Erhalt eines vom Fahrzeugführer ausgelösten Bestätigungssignals, wieder neu startet. Das zur Kraftstoffeinsparung vorgesehene An- und Abstellen des mindestens einen Verbrennungsmotors erfolgt somit automatisch oder zumindest mit geringem Bedienaufwand für den Fahrzeugführer. Dies erhöht den Bedienkomfort des Schienenfahrzeugs.

Es kann vorgesehen sein, dass die Steuer- und Regeleinheit derart ausgebildet ist, dass bei einem erneuten Bedarf an Traktionsleistung die Steuer- und Regeleinheit alle Verbrennungsmotoren wieder neu startet. Gemäß einem weiteren Ausführungsbeispiel kann vorgesehen sein, dass die Steuer- und Regeleinheit eine dem Betrag des Traktionsleistungsbedarfs angepasste Anzahl an Verbrennungsmotoren wieder neu startet. Dadurch können die Verbrennungsmotoren an besonders wirtschaftlichen Betriebspunkten betrieben werden.

Gemäß einem vorteilhaften Ausführungsbeispiel ist mindestens ein Motorstarter vorgesehen, welcher zu seiner Energieversorgung mit einem Motorstarter-Energiespeicher verbunden ist und in Wirkverbindung zu der Steuer- und Regeleinheit und dem mindestens einen Verbrennungsmotor steht, so dass der Verbrennungsmotor über die Steuer- und Regeleinheit neu startbar ist.

Über die Steuer- und Regeleinheit wird somit der mindestens eine zur Kraftstoffeinsparung abgestellte Verbrennungsmotor durch Ansteuern des Motorstarters gestartet, welcher die elektrische Energie zum Starten des Verbrennungsmotors aus dem Motorstarter-Energiespeicher bezieht. Dabei kann jedem Verbrennungsmotor ein eigener Motorstarter zugeordnet sein, welcher über einen eigenen oder gemeinsamen Motorstarter-Energiespeicher mit Energie versorgt wird. Die Steuer- und Regeleinheit ist beispielsweise zum selbsttätigen Ansprechen des Motorstarters eingerichtet. Abweichend hiervon ist die Steuer- und Regeleinheit mit einem Quittiergerät verbunden, wobei das Ansprechen des Motorstarters erst nach dem Quittieren des Startbefehls durch den Fahrzeugführer erfolgt.

Es kann auch als vorteilhaft angesehen werden, dass der Motorstarter-Energiespeicher in Wirkverbindung zu mindestens einem Verbrennungsmotor steht und von diesem bereitgestellte Energie zwischenspeichert.

Es kann auch als vorteilhaft angesehen werden, dass eine mit der Steuer- und Regeleinheit verbundene Detektionseinrichtung zur Ermittlung der im Leerlaufpuffer-Energiespeicher gespeicherten Energie vorgesehen ist.

Unterschreitet die im Leerlaufpuffer-Energiespeicher gespeicherte Energie einen Mindestbetrag, kann die mittels der Detektionseinrichtung hierüber informierte Steuer- und Regeleinheit zur Aufrechterhaltung der Energieversorgung der elektrischen Verbraucher veranlassen, dass zumindest ein Teil der ausgeschalteten Verbrennungsmotoren wieder neu gestartet wird.

Dies gewährleistet eine kontinuierliche Versorgung der elektrischen Verbraucher mit Energie. Sobald Verbrennungsmotoren wieder neu gestartet sind, erfolgt parallel zur Energieversorgung der elektrischen Verbraucher ein Wiederaufladen des Leerlaufpuffer-Energiespeichers. Zusätzlich können die durch den Neustart zumindest teilentladenen Motorstarter-Energiespeicher neu aufgeladen werden.

Gemäß einem weiteren vorteilhaften Ausführungsbeispiel können mit der Steuer- und Regeleinheit verbundene Mittel zur Bestimmung des momentanen Energieverbrauchs elektrischer Verbraucher vorgesehen sein. Die Umstellung der Energieversorgung elektrischer Verbraucher auf den Leerlaufpuffer-Energiespeicher kann somit unter Berücksichtigung des momentanen Energieverbrauchs eingeschalteter elektrischer Verbraucher vorgenommen werden.

Dies verhindert ein unnötiges Ab- und wieder Anstellen der Verbrennungsmotoren.

Es kann auch als vorteilhaft angesehen werden, dass die Steuer- und Regeleinheit mit mindestens zwei, einen hohen Energieverbrauch aufweisenden elektrischen Verbrauchern in Wirkverbindung steht.

Somit kann die Steuer- und Regeleinheit bei zur Kraftstoffeinsparung vollständig abgeschalteten Verbrennungsmotoren elektrische Verbraucher mit hohem Energieverbrauch zeitversetzt zu anderen elektrischen Verbrauchern mit hohem Energieverbrauch an- und abschaltet.

Dies reduziert die vom Leerlaufpuffer-Energiespeicher zu liefernde Leistung. Da eine Vielzahl der elektrischen Verbraucher nicht zwingend permanent betrieben werden müssen, kann die Steuer- und Regeleinheit durch das zeitversetzte An- und Abstellen von elektrischen Verbrauchern mit hohem Energieverbrauch den Leistungsbedarf der Anlage verringern. Der Leerlaufpuffer-Energiespeicher kann somit kleiner und damit preisgünstiger dimensioniert werden. Beispiele für elektrische Verbraucher, die permanent mit Energie versorgt werden müssen, sind die Innenbeleuchtung, das Außenlicht, Scheibenwischer, Displays, Bordrechner. Beispiele für elektrische Verbraucher, welche nicht permanent mit elektrischer Energie versorgt werden müssen, sind beispielsweise der Heizbetrieb des Schienenfahrzeugs. Beispiele für elektrische Verbraucher, welche zwar nicht permanent betrieben werden müssen, aber bei Bedarf sofort einschaltbar sein müssen, sind beispielsweise die Scheibenheizung, Sandkastenheizung, Ölheizung, Vorschmierpumpe oder die Versorgung der Steckdosen. Es kann auch vorgesehen sein, dass einige elektrische Verbraucher durch ein separates kraftstoffbetriebenes Gerät mit elektrischer Energie versorgt werden. Diese kraftstoffbetriebenen Geräte können Hilfsmotoren sein, welche im Rahmen dieser Erfindung nicht mit Verbrennungsmotoren des Schienenfahrzeugs bezeichnet sind, da sie nicht zu dessen Antrieb eingesetzt werden. Bei zur Kraftstoffeinsparung vollständig abgeschalteten Verbrennungsmotoren müssen somit nicht sämtliche elektrischen Verbraucher über den Leerlaufpuffer-Energiespeicher mit Energie versorgt werden.

Gemäß einem weiteren vorteilhaften Ausführungsbeispiel kann vorgesehen sein, dass mit der Steuer- und Regeleinheit verbundene Mittel zur Bestimmung des Betriebszustands des elektrischen Verbrauchers Luftpresser vorgesehen sind.

Der elektrische Verbraucher Luftpresser kann auch mit Luftverdichter oder Kompressor bezeichnet werden. Er dient der Erzeugung von Druckluft, beispielsweise um über Hauptluftleitungen Druckluftbremsen des Schienenfahrzeugs mit Druckluft zu versorgen. Um den Leerlaufpuffer-Energiespeicher nicht unnötig groß dimensionieren zu müssen, kann vorgesehen sein, dass elektrische Verbraucher mit besonders hohem Energiebedarf durch laufende Verbrennungsmotoren mit Energie versorgt werden. Die Steuer- und Regeleinheit veranlasst beim Anstellen eines solchen elektrischen Verbrauchers das Starten mindestens eines Verbrennungsmotors, welcher einen Generator zur Versorgung des elektrischen Verbrauchers antreibt.

Somit kann die Steuer- und Regeleinheit bei zur Kraftstoffeinsparung vollständig abgestellten Verbrennungsmotoren beim Einschalten des elektrischen Verbrauchers Luftpresser mindestens einen Verbrennungsmotor wieder starten.

Es kann auch als vorteilhaft angesehen werden, dass der Leerlaufpuffer-Energiespeicher ein Akkumulator ist.

Beispielsweise kann der Leerlaufpuffer-Energiespeicher ein elektro-chemischer Akkumulator sein. Dies ist eine besonders bewährte und kostengünstige Technologie. Selbstverständlich kommen auch Supercups oder dergleichen in Betracht. Vorteilhafterweise kann weiter vorgesehen sein, dass der Leerlaufpuffer-Energiespeicher eine Energiespeicher-Kapazität aufweist, welche an die Energieversorgung der vom Leerlaufpuffer-Energiespeicher zu versorgenden elektrischen Verbraucher und die durchschnittlichen Zeiträume ohne Traktionsleistungsbedarfs des Schienenfahrzeugs angepasst ist.

Beispielsweise beträgt bei einer Rangierlok die durchschnittliche Dauer der Leerlaufbetriebszeiten etwa 65% der gesamten Fahrzeit. Die Kapazität des Leerlaufpuffer-Energiespeichers sollte dann so gewählt sein, dass die Energieversorgung der vom Leerlaufpuffer-Energiespeicher versorgten elektrischen Verbraucher während dieser Zeit vollständig durch den Leerlaufpuffer-Energiespeicher gewährleistet ist. Dies verhindert ein unnötiges Ab- und wieder Anstellen der Verbrennungsmotoren. Gleichzeitig sollte der Leerlaufpuffer-Energiespeicher bezüglich seiner Speicherkapazität nicht größer als nötig dimensioniert werden. Dies Reduziert die Anschaffungskosten des erfindungsgemäßen Schienenfahrzeugs. Somit ist der gemäß dem Ausführungsbeispiel angegebene Leerlaufpuffer-Energiespeicher insbesondere nicht zur Unterstützung der Traktion vorgesehen. Er dient ausschließlich der Energieversorgung der elektrischen Verbraucher bei fehlendem Bedarf an Traktionsleistung.

Eine weitere vorteilhafte Ausgestaltung der Erfindung kann vorsehen, dass der Leerlaufpuffer-Energiespeicher eine Leistung von mehr als 15 kW aufweist.

Es kann auch als vorteilhaft angesehen werden, dass der mindestens eine Verbrennungsmotor ein Dieselmotor ist.

Vorteilhafterweise kann weiter vorgesehen sein, dass das Schienenfahrzeug dieselelektrisch ist.

Das Schienenfahrzeug weist mindestens einen Dieselmotor auf, welcher über einen Generator und einen nachgeschalteten Frequenzumrichter elektrische Energie zum Antreiben von Fahrmotoren bereitstellt. Der ohnehin für die Traktion vorhandene Generator kann somit auch zur Erzeugung elektrischer Energie für die elektrischen Verbraucher sowie den Leerlaufpuffer-Energiespeicher genutzt werden.

Es kann weiter vorteilhaft vorgesehen sein, dass das Schienenfahrzeug eine Rangierlokomotive ist.

Bei dem erfindungsgemäßen Schienenfahrzeug kann es sich um jede Art von Schienenfahrzeug handeln. Beispielsweise kann es sich um ein Hochgeschwindigkeitsschienenfahrzeug zum Transport von Personen handeln oder um einen Gütertransportzug. Das Schienenfahrzeug kann aus mehreren Triebfahrzeugen bestehen oder beispielsweise eine einzelne Lokomotive sein. Im Falle einer Rangierlokomotive können die Leerlaufbetriebszeiten bis zu 65% der gesamten Fahrzeit betragen. In diesem Fall kann durch die Vorrichtung zur Reduzierung des Kraftstoffverbrauchs besonders viel Kraftstoff eingespart werden.

Ausgehend von dem eingangs genannten Verfahren wird die Aufgabe erfindungsgemäß dadurch gelöst, dass der Energiespeicher von mindestens einem der Verbrennungsmotoren mit Energie aufgeladen wird und im Falle fehlenden Traktionsleistungsbedarfs die Versorgung elektrischer Verbraucher auf den Energiespeicher um- und die laufenden Verbrennungsmotoren abgestellt werden.

Vorteilhafterweise kann weiter vorgesehen sein, dass bei einem erneuten Bedarf an Traktionsleistung die zur Kraftstoffeinsparung abgestellten Verbrennungsmotoren zumindest teilweise und über die Steuer- und Regeleinheit gestartet werden. Beispielsweise können die Verbrennungsmotoren von der Steuer- und Regeleinheit automatisch oder erst nach Eingang eines vom Fahrzeugführer ausgelösten Bestätigungssignals gestartet werden.

Es kann auch als vorteilhaft angesehen werden, dass bei Unterschreiten einer im Leerlaufpuffer-Energiespeicher gespeicherten minimalen Energiemenge die Verbrennungsmotoren zumindest teilweise und über die Steuer- und Regeleinheit gestartet werden.

Gemäß einem weiteren vorteilhaften Ausführungsbeispiel erfolgt bei einem fehlenden Bedarf an Traktionsleistung die Umstellung der Energieversorgung elektrischer Verbraucher auf den Leerlaufpuffer-Energiespeicher unter Berücksichtigung der momentan im Energiespeicher zwischengespeicherten Energiemenge und des momentanen Energieverbrauchs elektrischer Verbraucher.

Weiter kann vorteilhaft vorgesehen sein, dass bei zur Kraftstoffeinsparung vollständig abgeschalteten Verbrennungsmotoren elektrische Verbraucher mit hohem Energiebedarf zeitversetzt betrieben werden.

Es kann auch als vorteilhaft angesehen werden, dass bei einem Einschaltvorgang des elektrischen Verbrauchers Luftpresser bei zur Kraftstoffeinsparung vollständig abgestellten Verbrennungsmotoren mindestens ein Verbrennungsmotor gestartet wird.

Es kann auch als vorteilhaft angesehen werden, dass im Fall mindestens eines laufenden Verbrennungsmotors der Leerlaufpuffer-Energiespeicher ausschließlich Energie speichert. Gemäß dem Ausführungsbeispiel dient der Leerlaufpuffer-Energiespeicher bei laufenden Verbrennungsmotoren nicht der Traktion oder der Energieversorgung elektrischer Verbraucher.

Gemäß einem weiteren vorteilhaften Ausführungsbeispiel wird bei Verwendung von mindestens zwei Verbrennungsmotoren die Anzahl der laufenden Verbrennungsmotoren dem Traktionsleistungsbedarf angepasst.

Zusätzlich zu der erfindungsgemäßen Möglichkeit Kraftstoff einzusparen, indem bei fehlendem Bedarf an Traktionsleistung die Steuer- und Regeleinheit alle Verbrennungsmotoren abstellt, wird ferner vorgeschlagen, dass bei geringem Traktionsleistungsbedarf die Steuer- und Regeleinheit einzelne Verbrennungsmotoren abstellt, so dass die noch laufenden Verbrennungsmotoren an besonders günstigen Betriebspunkten betrieben werden können. Mit anderen Worten wird je nach dem momentanen Traktionsleistungsbedarf die Steuer- und Regeleinheit einzelne Verbrennungsmotoren abstellen oder wieder neu starten und somit die Anzahl der laufenden Verbrennungsmotoren dem momentanen Traktionsleistungsbedarf anpassen. Bei einer Fahrt des Schienenfahrzeugs, bei der zu einem Anfangszeitpunkt ein Spitzenwert des Traktionsleistungsbedarfs besteht, welcher dann auf Null abfällt, würde die Steuer- oder Regeleinheit ausgehend von einem Zustand, bei welchem alle Verbrennungsmotoren arbeiten, sukzessive Verbrennungsmotoren abstellen, bis bei fehlendem Bedarf an Traktionsleistung die Steuer- und Regeleinheit auch den letzten Verbrennungsmotor ab- und damit die Energieversorgung der elektrischen Verbraucher auf den Leerlaufpuffer-Energiespeicher umstellt.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

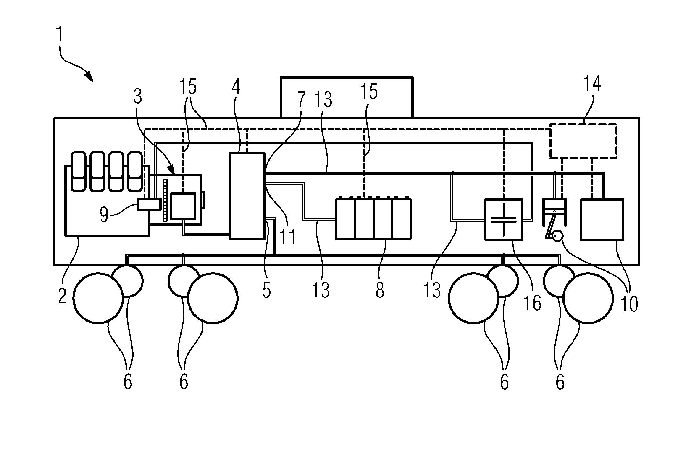

Dabei zeigt die
- Figur 1: ein erfindungsgemäßes Schienenfahrzeug mit einer Vorrichtung zur Reduzierung des Kraftstoffbedarfs in schematischer Darstellung.

Die Figur 1 zeigt in schematischer Darstellung ein erfindungsgemäßes Schienenfahrzeug 1, welches einen Dieselmotor 2 aufweist. Der Dieselmotor 2 steht in Wirkverbindung mit einem Generator 3. Der Generator 3 ist über eine Leistungsübertragungsleitung 13 mit einem Hauptumrichter 4 verbunden, welcher einen Hilfsbetriebeausgang 7, einen weiteren Ausgang 11 und einen Traktionsausgang 5 aufweist. Eine Leistungsübertragungsleitung 13 verbindet den Traktionsausgang 5 des Hauptumrichters 4 mit Fahrmotoren 6. Eine weitere Leistungsübertragungsleitung 13 verbindet den Hilfsbetriebeausgang 7 mit einem Bordnetz, an welche Hilfsbetriebe 10 und ein Motorstarter-Energiespeicher angeschlossen sind. Der Motorstarter-Energiespeicher 16 weist wiederum einen Ausgang auf, an welchem er mittels einer Leistungsübertragungsleitung 13 mit einem Motorstarter 9 verbunden ist, welcher am Verbrennungsmotor 2 angeordnet ist.

Am weiteren Ausgang 11 des Hauptumrichters 4 ist der Leerlaufpuffer-Energiespeicher angeschlossen. Eine Steuer- und Regeleinheit 14 ist über Steuerleitungen 15 mit diesen Komponenten 2, 9, 3, 4, 8, 10, 16 verbunden.

Um Traktionsleistung für das dieselelektrische Schienenfahrzeug 1 bereitzustellen, treibt der Dieselmotor 2 den Generator 3 an, wodurch dieser eine elektrische Wechselspannung mit der gleichen Frequenz der Umdrehungsfrequenz des Dieselmotors 2 generiert. Diese elektrische Spannung wird mittels des Hauptumrichters 4 auf eine geeignete Frequenz, welche am Traktionsausgang 4 anliegt, geändert, so dass die Fahrmotoren 6 mit einer der momentanen Geschwindigkeit des Schienenfahrzeugs angepassten Frequenz betrieben werden können. Zusätzlich liefert der Hauptumrichter 4 am Hilfsbetriebeausgang 7 eine elektrische Spannung zur Versorgung des Dieselstarter-Energiespeichers 16 und der Hilfsbetriebe 10. Das über den Hilfsbetriebeausgang 7 versorgte Bordnetz kann ein Wechselspannungsnetz oder ein Gleichspannungsnetz sein. Zudem können weitere Ausgänge am Hauptumrichter für weitere AC- oder DC-Bordnetze vorgesehen sein (nicht dargestellt). Die dargestellte Anordnung des Motorstarter-Energiespeichers an einem gemeinsamen Bordnetz mit den Hilfsbetrieben ist zudem nicht zwingend. Der Leerlaufpuffer-Energiespeicher 8 wird über den weiteren Ausgang 11 mit Energie versorgt. Zur Steuerung der Leistungsübertragung zwischen den einzelnen Komponenten 2, 3, 4, 5, 6, 7, 8, 9, 10, 16 ist die Steuer- und Regeleinheit 14 vorgesehen. Befindet sich das Schienenfahrzeug 1 in einem Zustand fehlenden Bedarfs an Traktionsleistung, beispielsweise bei einer Gefällefahrt, empfängt die Steuereinheit 14 Informationen über den fehlenden Bedarf an Traktionsleistung von Mitteln zur Bestimmung des Bedarfs an Traktionsleistung (nicht dargestellt). Unter Berücksichtigung der im Leerlaufpuffer-Energiespeichers 8 gespeicherten Energiemenge und der zu diesem Zeitpunkt Energie verbrauchenden Hilfsbetriebe 10 schaltet die Steuer- oder Regeleinheit 14 den Dieselmotor 2 zur Vermeidung eines Leerlaufbetriebs ab und stellt die elektrische Versorgung der Hilfsbetriebe 10 auf den Leerlaufpuffer-Energiespeicher 8 um. Bei einem erneuten Bedarf an Traktionsenergie, beispielsweise wenn das Schienenfahrzeug 1 beschleunigt werden soll, startet der Dieselmotor 2 über die Steuereinheit 14, gegebenenfalls nach Bestätigung durch den Fahrzeugführer, mittels des Motorstarters 9, welcher von dem Motorstarter-Energiespeicher 16 mit Energie versorgt wird. Der somit neu gestartete Dieselmotor 2 versorgt dann sowohl die die Beschleunigung bewirkenden Fahrmotoren 6 als auch die neu aufzuladenden Energiespeicher 8 und 16 sowie die mit elektrischer Energie zu betreibenden Hilfsbetriebe 10. Durch Versorgung der Hilfsbetriebe 10 mittels des Leerlaufpuffer-Energiespeichers 8 in Zeiten, in welchem kein Bedarf an Traktionsleistung besteht und der Dieselmotor 2 somit zur Aufrechterhaltung der Mindestumdrehungszahl Kraftstoff verschwenden würde, kann dieser Kraftstoff eingespart werden. Unabhängig davon, ob das Schienenfahrzeug 1 im Strecken- oder Rangierbetrieb eingesetzt wird, ist ein besonders geringer Kraftstoffverbrauch des Schienenfahrzeugs 1 ermöglicht.

### Bezugszeichenliste

- 1: Schienenfahrzeug mit einer Vorrichtung zur Reduzierung des Kraftstoffverbrauchs
- 2: Dieselmotor
- 3: Generator
- 4: Hauptumrichter
- 5: Traktionsausgang
- 6: Fahrmotor
- 7: Hilfsbetriebeausgang
- 8: Leerlaufpuffer-Energiespeicher
- 9: Motorstarter
- 10: Hilfsbetriebe
- 11: weiterer Ausgang des Hauptumrichters 4
- 13: Leistungsübertragungsleitung
- 14: Steuer- oder Regeleinheit
- 15: Steuerleitung
- 16: Motorstarter-Energiespeicher

## Patentansprüche

1. Schienenfahrzeug (1) mit
- mindestens einem Verbrennungsmotor (2), welcher Traktionsenergie bereitstellt,
- mindestens einem Generator (3), der in Wirkverbindung mit mindestens einem der Verbrennungsmotoren (2) steht und hierüber angetrieben elektrische Energie erzeugt,
- elektrischen Verbrauchern (10), welche zur Energieversorgung in Wirkverbindung mit mindestens einem der Generatoren (3) stehen, und
- einer Einrichtung zur Reduzierung des Kraftstoffverbrauchs, welche einen Energiespeicher (8) sowie eine dem Energiemanagement dienende Steuer- und Regeleinheit (14) umfasst,
**dadurch gekennzeichnet, dass**
- der Energiespeicher (8) ein Leerlaufpuffer-Energiespeicher ist und in Wirkverbindung zu mindestens einem der Verbrennungsmotoren (2) steht und von diesem bereitgestellte Energie zwischenspeichert und
- Mittel zur Bestimmung des Bedarfs an Traktionsleistung vorgesehen sind, wobei
- die Mittel zur Bestimmung des Bedarfs an Traktionsleistung so mit der Steuer- und Regeleinheit (14) zusammen wirken, dass bei einem fehlendem Bedarf an Traktionsleistung die Versorgung der elektrischen Verbraucher (10) bei abgestellten Verbrennungsmotoren (2) durch den Energiespeicher (8) erfolgt.

2. Schienenfahrzeug (1) nach Anspruch 1,
**dadurch gekennzeichnet, dass** mindestens ein Motorstarter (9) vorgesehen ist, welcher zu seiner Energieversorgung mit einem Motorstarter-Energiespeicher (16) verbunden ist und in Wirkverbindung zu der Steuer- und Regeleinheit (14) und dem mindestens einen Verbrennungsmotor (2) steht, so dass der Verbrennungsmotor (2) über die Steuer- und Regeleinheit (14) neu startbar ist.

3. Schienenfahrzeug nach Anspruch 2,
**dadurch gekennzeichnet, dass** der Motorstarter-Energiespeicher (16) in Wirkverbindung zu mindestens einem Verbrennungsmotor (2) steht und von diesem bereitgestellte Energie zwischenspeichert.

4. Schienenfahrzeug nach einem der vorstehenden Ansprüche,
**gekennzeichnet durch**
eine mit der Steuer- und Regeleinheit (14) verbundene Detektionseinrichtung zur Ermittlung der im Leerlaufpuffer-Energiespeicher (8) gespeicherten Energie.

5. Schienenfahrzeug nach einem der vorstehenden Ansprüche,
**gekennzeichnet durch**
mit der Steuer- und Regeleinheit (14) verbundene Mittel zur Bestimmung des momentanen Energieverbrauchs elektrischer Verbraucher.

6. Schienenfahrzeug nach einem der vorstehenden Ansprüche,
**dadurch gekennzeichnet, dass** die Steuer- und Regeleinheit (14) mit mindestens zwei, einen hohen Energieverbrauch aufweisenden elektrischen Verbrauchern (10) in Wirkverbindung steht.

7. Schienenfahrzeug nach einem der vorstehenden Ansprüche,
**gekennzeichnet durch**
mit der Steuer- und Regeleinheit verbundene Mittel zur Bestimmung des Betriebszustands des elektrischen Verbrauchers Luftpresser.

8. Schienenfahrzeug nach einem der vorstehenden Ansprüche,
**dadurch gekennzeichnet, dass** der Leerlaufpuffer-Energiespeicher (8) ein Akkumulator ist.

9. Schienenfahrzeug nach einem der vorstehenden Ansprüche,
**dadurch gekennzeichnet, dass** der Leerlaufpuffer-Energiespeicher (8) eine Energiespeicher-Kapazität aufweist, welche an die Energieversorgung der vom Leerlaufpuffer-Energiespeicher (8) zu versorgenden elektrischen Verbraucher (10) und die durchschnittlichen Zeiträume ohne Traktionsleistungsbedarfs des Schienenfahrzeugs (1) angepasst ist.

10. Schienenfahrzeug nach einem der vorstehenden Ansprüche,
**dadurch gekennzeichnet, dass** der Leerlaufpuffer-Energiespeicher (8) eine Leistung von mehr als 15 kW aufweist.

11. Schienenfahrzeug nach einem der vorstehenden Ansprüche,
**dadurch gekennzeichnet, dass** der mindestens eine Verbrennungsmotor (2) ein Dieselmotor ist.

12. Schienenfahrzeug nach einem der vorstehenden Ansprüche,
**dadurch gekennzeichnet, dass** das Schienenfahrzeug (1) dieselelektrisch ist.

13. Schienenfahrzeug nach einem der vorstehenden Ansprüche,
**dadurch gekennzeichnet, dass** das Schienenfahrzeug (1) eine Rangierlokomotive ist.

14. Verfahren zur Reduzierung des Kraftstoffverbrauchs eines Schienenfahrzeugs bei dem
- mindestens ein Verbrennungsmotor (2) Traktionsenergie bereitstellt,
- mindestens ein Generator (3) elektrische Energie erzeugt und diese Energie zumindest teilweise von elektrischen Verbrauchern (10) verbraucht wird,
- der Bedarf an Traktionsleistung bestimmt wird und
- Verbrennungsmotoren (2) bei fehlendem Bedarf an Traktionsleistung abgestellt werden,
**dadurch gekennzeichnet, dass** der Energiespeicher (8) von mindestens einem der Verbrennungsmotoren (2) mit Energie aufgeladen wird und im Falle fehlenden Traktionsleistungsbedarfs die Versorgung elektrischer Verbraucher (10) auf den Energiespeicher (8) um- und die laufenden Verbrennungsmotoren (2) abgestellt werden.

15. Verfahren nach Anspruch 14,
**dadurch gekennzeichnet, dass** bei einem erneuten Bedarf an Traktionsleistung die zur Kraftstoffeinsparung abgestellten Verbrennungsmotoren (2) zumindest teilweise und über die Steuer- und Regeleinheit gestartet werden.

16. Verfahren nach einem der Ansprüche 14 bis 15,
**dadurch gekennzeichnet, dass** bei Unterschreiten einer im Leerlaufpuffer-Energiespeicher (8) gespeicherten minimalen Energiemenge die Verbrennungsmotoren (2) zumindest teilweise und über die Steuer- und Regeleinheit gestartet werden.

17. Verfahren nach einem der Ansprüche 14 bis 16,
**dadurch gekennzeichnet, dass** bei einem fehlenden Bedarf an Traktionsleistung die Umstellung der Energieversorgung elektrischer Verbraucher (10) auf den Leerlaufpuffer-Energiespeicher (8) unter Berücksichtigung der momentan im Energiespeicher (8) zwischengespeicherten Energiemenge und des momentanen Energieverbrauchs elektrischer Verbraucher (10) erfolgt.

18. Verfahren nach einem der Ansprüche 14 bis 17,
**dadurch gekennzeichnet, dass** bei zur Kraftstoffeinsparung vollständig abgeschalteten Verbrennungsmotoren (2) elektrische Verbraucher (10) mit hohem Energiebedarf zeitversetzt betrieben werden.

19. Verfahren nach einem der Ansprüche 14 bis 18,
**dadurch gekennzeichnet, dass** bei einem Einschaltvorgang des elektrischen Verbrauchers Luftpresser bei zur Kraftstoffeinsparung vollständig abgestellten Verbrennungsmotoren (2) mindestens ein Verbrennungsmotor (2) gestartet wird.

20. Verfahren nach einem der Ansprüche 14 bis 19,
**dadurch gekennzeichnet, dass** im Fall mindestens eines laufenden Verbrennungsmotors (2) der Leerlaufpuffer-Energiespeicher (8) ausschließlich Energie speichert.

21. Verfahren nach einem der Ansprüche 14 bis 20,
**dadurch gekennzeichnet, dass** bei Verwendung von mindestens zwei Verbrennungsmotoren (2) die Anzahl der laufenden Verbrennungsmotoren (2) dem Traktionsleistungsbedarf angepasst wird.

## Claims

1. Railway vehicle (1) with
- at least one internal combustion engine (2) which provides traction energy,
- at least one generator (3) which is actively connected to at least of the internal combustion engines (2) and, driven via said engine, generates electrical energy,
- electrical loads (10) which, for supply of energy, are actively connected to at least one of the generators (3), and
- a device for reducing the fuel consumption, comprising an energy store (8) and also an open-loop and closed-loop control unit (14) used for energy management,
**characterised in that**
- the energy store (8) is a no-load buffer energy store and is actively connected to at least one of the internal combustion engines (2) and buffers energy provided by said engine and
- means for determining the requirement for traction power are provided, wherein
- the means for determining the requirement for traction power interact with the open-loop and closed-loop control unit (14) so that, if there is no requirement for traction power, the electrical loads (10) are supplied by the energy store (8), with the internal combustion engines (2) shut down.

2. Railway vehicle (1) according to claim 1,
**characterised in that**
at least one motor starter (9) is provided which, for its energy supply, is connected to a motor starter energy store (16) and is actively connected to the open-loop and closed-loop control unit (14) and the at least one internal combustion engine (2), so that the internal combustion engine (2) can be started again via the open-loop and closed-loop control unit (14).

3. Railway vehicle according to claim 2,
**characterised in that**
the motor starter energy store (16) is actively connected to at least one internal combustion engine (2) and buffers energy provided by said engine.

4. Railway vehicle according one of the preceding claims,
**characterised by**
a detection device connected to the open-loop and closed-loop control unit (14) for establishing the energy stored in the no-load buffer energy store (8).

5. Railway vehicle according one of the preceding claims,
**characterised by**
means connected to the open-loop and closed-loop control unit (14) for determining the instantaneous energy consumption of electrical loads.

6. Railway vehicle according one of the preceding claims,
**characterised in that**
the open-loop and closed-loop control unit (14) is actively connected to at least two loads (10) having a high energy consumption.

7. Railway vehicle according one of the preceding claims,
**characterised by**
means connected to the open-loop and closed-loop control unit (14) for determining the operating state of the air compressor electrical load.

8. Railway vehicle according one of the preceding claims,
**characterised in that**
the no-load buffer energy store (8) is an accumulator.

9. Railway vehicle according one of the preceding claims,
**characterised in that**
the no-load buffer energy store (8) has an energy store capacity which is matched to the energy supply of the electrical loads (10) to be supplied by the no-load buffer energy store (8) and to the average periods without any traction power requirement of the railway vehicle (1).

10. Railway vehicle according one of the preceding claims,
**characterised in that**
the no-load buffer energy store (8) has a power of more than 15 kW.

11. Railway vehicle according one of the preceding claims,
**characterised in that**
the at least one internal combustion engine (2) is a diesel engine.

12. Railway vehicle according one of the preceding claims,
**characterised in that**
the railway vehicle (1) is diesel-electric.

13. Railway vehicle according one of the preceding claims,
**characterised in that**
the railway vehicle (1) is a shunting locomotive.

14. Method for reducing the fuel consumption of a railway vehicle, in which
- at least one internal combustion engine (2) provides traction energy,
- at least one generator (3) generates electrical energy and this energy is at least partly consumed by electrical loads (10),
- the demand for traction power is determined and
- internal combustion engines (2) are shut down if there is no demand for traction power,
**characterised in that**
the energy store (8) is charged with energy by at least one of the internal combustion engines (2) and, in the event of no traction power demand, the supply of electrical loads (10) is switched to the energy store (8) and the running internal combustion engines (2) are shut down.

15. Method according to claim 14,
**characterised in that**
with a renewed demand for traction power, the internal combustion engines (2) shut down for fuel saving are at least partly started by the open-loop and closed-loop control unit.

16. Method according to one of claims 14 to 15,
**characterised in that**
if the minimum amount of energy stored in the no-load buffer energy store (8) falls below a certain level, the internal combustion engines (2) are at least partly started and this is done via the open-loop and closed-loop control unit (14).

17. Method according to one of claims 14 to 16,
**characterised in that**
if there is no demand for traction power, the energy supply of electrical loads (10) is switched over to the no-load buffer electrical store (8) taking into account the amount of energy currently buffered in the energy store (8) and the current energy consumption of electrical loads (10).

18. Method according to one of claims 14 to 17,
**characterised in that**
with internal combustion engines (2) shut down completely for fuel saving, electrical loads (10) with high energy demand are operated offset in time.

19. Method according to one of claims 14 to 18,
**characterised in that**
for a switch-on process of the air compressor electrical load, with internal combustion engines (2) completely shut down for fuel saving, at least one internal combustion engine (2) is started.

20. Method according to one of claims 14 to 19,
**characterised in that**
in the event that at least one internal combustion engine (2) is running, the no-load buffer energy store (8) exclusively stores energy.

21. Method according to one of claims 14 to 20,
**characterised in that**
when at least two internal combustion engines (2) are used, the number of internal combustion engines (2) running is matched to the traction power demand.

## Revendications

1. Véhicule (1) ferroviaire comprenant
- au moins un moteur (2) à combustion interne qui procure de l'énergie de traction,
- au moins une génératrice (3) qui est en liaison d'action avec au moins l'un des moteurs (2) à combustion et qui, ainsi entraînée, produit de l'énergie électrique,
- des consommateurs (10) électriques qui, pour l'alimentation en énergie, sont en liaison d'action avec au moins l'une des génératrices (3), et
- un dispositif de réduction de la consommation de carburant qui comprend un accumulateur (8) d'énergie ainsi qu'une unité (4) de commande et de régulation servant à la gestion de l'énergie,
**caractérisé en ce que**
- l'accumulateur (8) d'énergie est un accumulateur d'énergie tampon de marche à vide et est en liaison d'action avec au moins l'un des moteurs (2) à combustion interne et accumule intermédiairement de l'énergie procurée par celui-ci et
- il est prévu des moyens de détermination du besoin de puissance de traction, dans lequel
- les moyens de détermination du besoin de puissance de traction coopèrent avec l'unité (14) de commande et de régulation de manière à ce qu'en cas d'un manque de besoin de puissance de traction, l'alimentation des consommateurs (10) électrique s'effectue, alors que les moteurs (2) à combustion internes sont arrêtés, par l'accumulateur (8) d'énergie.

2. Véhicule ferroviaire (1) suivant la revendication 1,
**caractérisé en ce que**
il est prévu au moins un démarreur (9) de moteur qui, pour son alimentation en énergie est relié à un accumulateur (16) d'énergie de démarreur de moteur et est en liaison d'action avec l'unité (14) de commande et de régulation et avec le au moins un moteur (2) à combustion interne de manière à pouvoir faire redémarrer le moteur (2) à combustion interne par l'unité (14) de commande et de régulation.

3. Véhicule ferroviaire suivant la revendication 2,
**caractérisé en ce que**
l'accumulateur (16) d'énergie de démarreur de moteur est en liaison d'action avec au moins un moteur (2) à combustion interne et accumule intermédiairement de l'énergie procurée par celui-ci.

4. Véhicule ferroviaire suivant l'une des revendications précédentes,
**caractérisé par**
un dispositif de détection qui est relié à l'unité (14) de commande et de régulation et qui est destiné à déterminer l'énergie accumulée dans l'accumulateur d'énergie tampon de marche à vide.

5. Véhicule ferroviaire suivant l'une des revendications précédentes,
**caractérisé par**
des moyens reliés à l'unité (14) de commande et de régulation et de détermination de la consommation d'énergie instantanée des consommateurs électriques.

6. Véhicule ferroviaire suivant l'une des revendications précédentes,
**caractérisé en ce que**
l'unité (14) de commande et de régulation est en liaison d'action avec au moins deux consommateurs (10) électriques ayant une grande consommation d'énergie.

7. Véhicule ferroviaire suivant l'une des revendications précédentes,
**caractérisé par**
des moyens reliés à l'unité de commande et de régulation et de détermination de l'état de fonctionnement du consommateur électrique qui est un compresseur d'air.

8. Véhicule ferroviaire suivant l'une des revendications précédentes,
**caractérisé en ce que**
l'accumulateur (8) d'énergie tampon de marche à vide est un accumulateur électrochimique.

9. Véhicule ferroviaire suivant l'une des revendications précédentes,
**caractérisé en ce que**
l'accumulateur (8) d'énergie tampon de marche à vide a une capacité d'accumulation d'énergie qui est adaptée à l'alimentation en énergie des consommateurs (10) électriques alimentés par l'accumulateur (8) d'énergie tampon de marche à vide et au laps de temps moyen sans besoin de puissance de traction du véhicule (1) ferroviaire.

10. Véhicule ferroviaire suivant l'une des revendications précédentes,
**caractérisé en ce que**
l'accumulateur (8) d'énergie tampon de marche à vide a une puissance de plus de 15 kW.

11. Véhicule ferroviaire suivant l'une des revendications précédentes,
**caractérisé en ce que**
le au moins un moteur (2) à combustion interne est un moteur diesel.

12. Véhicule ferroviaire suivant l'une des revendications précédentes,
**caractérisé en ce que**
le véhicule (1) ferroviaire est diesel-électrique.

13. Véhicule ferroviaire suivant l'une des revendications précédentes,
**caractérisé en ce que**
le véhicule (1) ferroviaire est une locomotive de bosse.

14. Procédé de réduction de la consommation de carburant d'un véhicule ferroviaire, dans lequel
- au moins un moteur (2) à combustion interne procure de l'énergie de traction,
- au moins une génératrice (3) produit de l'énergie électrique et cette énergie est consommée au moins en partie par des consommateurs (10) électriques,
- le besoin de puissance de traction est déterminé, et
- des moteurs (2) à combustion internes sont arrêtés en cas de manque de besoin de puissance de traction,
**caractérisé en ce que**
l'accumulateur (8) d'énergie est chargé en énergie par au moins l'un des moteurs (2) à combustion interne et, en cas de manque de besoin de puissance de traction, l'alimentation des consommateurs (10) électriques passe à l'accumulateur (8) d'énergie et les moteurs (2) à combustion internes en fonctionnement sont arrêtés.

15. Procédé suivant la revendication 14,
**caractérisé en ce que**,
si l'on a besoin à nouveau de puissance de traction, les moteurs (2) à combustion internes arrêtés pour économiser du carburant sont redémarrés, au moins en partie, par l'unité de commande et de régulation.

16. Procédé suivant l'une des revendications 14 à 15,
**caractérisé en ce que**,
si l'on passe en dessous d'une quantité d'énergie minimum accumulée dans l'accumulateur (8) d'énergie tampon de marche à vide, les moteurs (2) à combustion internes sont démarrés, au moins en partie, par l'unité de commande et de régulation.

17. Procédé suivant l'une des revendications 14 à 16,
**caractérisé en ce que**,
en cas de manque de besoin de puissance de traction, le passage de l'alimentation en énergie des consommateurs (10) électrique par l'accumulateur (8) d'énergie tampon de marche à vide s'effectue en tenant compte de la quantité d'énergie accumulée intermédiairement instantanément dans l'accumulateur (8) d'énergie et de la consommation d'énergie instantanée des consommateurs (10) électriques.

18. Procédé suivant l'une des revendications 14 à 17,
**caractérisé en ce que**,
lorsque des moteurs (2) à combustion internes sont arrêtés complètement pour économiser du carburant, des consommateurs (10) électriques ayant un grand besoin d'énergie sont mis en fonctionnement de manière décalée dans le temps.

19. Procédé suivant l'une des revendications 14 à 18,
**caractérisé en ce que**,
lors d'une opération de branchement du consommateur électrique qui est un compresseur d'air, alors que des moteurs (2) à combustion interne sont arrêtés complètement pour économiser du carburant, on fait démarrer au moins un moteur (2) à combustion interne.

20. Procédé suivant l'une des revendications 14 à 19,
**caractérisé en ce que**,
dans le cas d'au moins un moteur (2) à combustion interne en fonctionnement, l'accumulateur (8) d'énergie tampon de marche à vide accumule exclusivement de l'énergie.

21. Procédé suivant l'une des revendications 14 à 20,
**caractérisé en ce que**,
lorsque l'on utilise au moins deux moteurs (2) à combustion interne, on adapte le nombre des moteurs (2) à combustion interne en fonctionnement au besoin de puissance de traction.
